# EUROPEAN PATENT APPLICATION

(11) **EP 1 111 712 A1**
(43) Date of publication of application: **27.06.2001**
(21) Application number: 00311415.4
(22) Date of filing: 19.12.2000
(51) Int. Cl.: H01Q 1/24

(54) **An antenna assembly**

(30) Priority: 22.12.1999 GB 9930415
(71) Applicant: NOKIA MOBILE PHONES LTD., 02150 Espoo (FI)
(72) Inventor: Hutchison, Mark, Arford, Headley, Hampshire GU25 8DB (GB)
(74) Representative: Haws, Helen

(57) **Abstract**

A communication apparatus having a first portion, a second portion and an extendible antenna is disclosed. The second portion is movable relative to the first portion. Such movement causes a corresponding movement of the antenna.

## Description

This invention relates to an antenna assembly for a portable telecommunications apparatus, which is configured to alter its profile in response to the movement of another part of the same apparatus. It is particularly suitable for use in portable radio telephones.

Antennas for use with portable radio telephones can take one or more forms. Standard antenna types include rod or whip antennas, helical or stub antennas, and internal plate antennas. As the telephones themselves become ever smaller, the antennas can sometimes appear out of proportion to the telephone housing. This is because the antenna generally has to be a certain size in order to operate effectively at any given frequency, while the rest of the components which constitute a telephone have benefited greatly from advances in miniaturisation.

In recent times, there has been a tendency to use helical or stub type antennas in preference to the rod or whip type of antenna. Helical antennas offer good performance in a smaller package size. Helical antennas have also been preferred as they do not need to be physically extended, and then withdrawn, as is the case with rod antennas. However, rod antennas tend to be cheaper, and more resistant to damage as they can be safely protected inside the housing of the telephone.

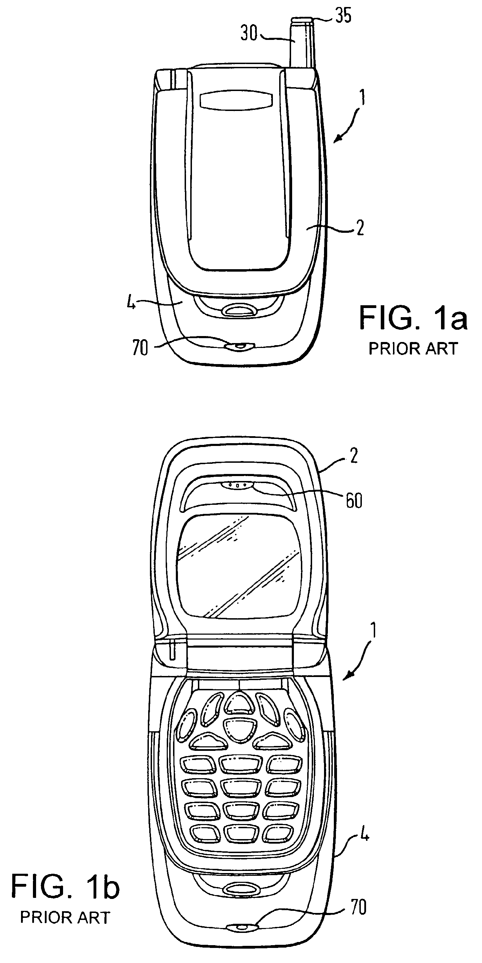

Another emerging trend in portable radio telephones is the folding, or clamshell telephone, e.g. the Nokia ® 282 telephone 1, as shown in Figures 1 a and 1 b. This type of telephone is arranged in two hingedly connected parts 2,4, which are closed in on each other when the telephone is not in use (Figure 1a) and are opened apart when in use (Figure 1b) so that a loudspeaker 60 can be located adjacent the user's ear, and a microphone 70 can be located adjacent the user's mouth.

An advantage of this type of telephone is the relatively small volume it occupies when in the closed state, allowing it to be easily and unobtrusively carried by the user.

The antenna of the telephone in Figures 1a and 1b is a hybrid antenna comprising a helical part 30, and a rod part 35. The helical part is intended to provide reception when the clamshell is closed, and the rod part, which is movable within the fixed helical part, is intended to be extended for improved reception and transmission when the clamshell is opened.

The use of an extendible rod antenna poses ergonomic problems, as it requires the user to open the clamshell arrangement and also to extend the antenna in order to answer an incoming call.

Internal antennas are a possible alternative, but they pose problems in that they can be obscured by the user's hand, when in use, which can adversely affect the performance of the antenna, and consequently interfere with reception and transmission of radio signals.

According to a first aspect of the present invention, there is provided a communication apparatus comprising: a first portion; a second portion, which is movable relative to the first portion; and an extendible antenna, wherein the antenna is arranged such that a movement of the second portion, relative to the first portion, causes a related movement of the antenna.

According to a second aspect of the invention there is provided a method for positioning an antenna of a communication apparatus, wherein: a first force is applied to move a second portion of the apparatus relative to a first portion; and the first force is translated into a second force which is used to correspondingly alter the position of the antenna.

An apparatus according to an embodiment of the invention offers the advantage that the user only has to perform a single operation to answer an incoming call, or to prepare to make an outgoing call, rather than open a clamshell, or open a slidable cover and extend an antenna.

Similarly, in order to terminate a call, the user only has to return the two parts to their original position, and the antenna will be automatically withdrawn.

The invention may advantageously be applied to any type of apparatus which has two parts which are moveable in relation to one another. Typical types of such configurations include the clamshell or foldable apparatus, and the type which includes a slidable cover.

The movable parts are advantageously arranged so that in a first position the keypad of the apparatus is concealed, and in a second position, the keypad is revealed.

The movement of one part from a first position may be used to place the apparatus in an off-hook state.

Preferably, the antenna, which extends in response to the relative movement of the two parts, reaches the full extent of its travel in either direction, when the relative movement of the two parts of the apparatus reach their respective endpoints.

In a particularly favourable embodiment, the second portion is biased away from the first position. The biasing may take the form of a spring which urges the two parts towards a generally open, or operational configuration from a generally closed, or standby configuration.

This embodiment allows a user of the apparatus to trigger a release mechanism, which will release the energy stored in a spring, which will urge the two parts of the apparatus towards a new position and cause the antenna to extend from within the apparatus housing.

In order to terminate a call, the user must return the two portions of the apparatus to their original condition by overcoming the resistance of the biasing spring and re-engaging the release mechanism. The apparatus then returns to a standby state to await a new incoming call, with the biasing system having been reset.

An advantageous effect of the automatic antenna invention when applied to a apparatus incorporating a sprung release mechanism is the damping effect that the antenna mechanism has on the movement of the two parts of the apparatus. Without any form of damping, the sprung release of the two parts of the apparatus can cause the movable part to hit its endstop with a considerable velocity. This can cause mechanical shock, and may cause damage over a period of time. Some of this excess energy can be dissipated in providing the energy required for the movement of the antenna, and so a smoother opening of the apparatus can be effected.

If separate damping means were to be provided separately, then they would require a significant amount of the limited space which is generally available in such portable apparatus. The force required to extend the antenna, usefully provides some resistance to the opening of the apparatus, thus slowing the opening of the apparatus, which reduces the possibility of damage, and provides a more pleasing action for the user.

Two particularly favourable embodiments of the invention are described. The first is the clamshell type apparatus, where a lid portion is movable in relation to a body portion such that the two portions are hinged together at respective edges.

In this embodiment, the rotary motion of the two portions is converted into the linear motion required to move the antenna.

Preferably, the movement of the lid portion drives a reduction gearbox, which in turn drives a drive wheel which is in frictional connection with the shaft of the antenna. In this way, rotational energy can be harnessed to drive the antenna up and out of the body portion of the apparatus.

To further enhance the operation of the frictional drive wheel, a complementary pinch wheel may be provided.

Advantageously, use of a frictional drive mechanism minimises the risk of damage to the apparatus if an attempt is made to move the antenna independently from the two halves of the clamshell structure.

In a second particularly favourable embodiment, a apparatus is provided which has a slidable member which is movable between two positions where the apparatus keypad is respectively hidden or revealed.

Preferably, the slidable element comprises an internal rack, or toothed elongate member. The rack extends internally, and meshes with a pinion, or small cog, which is free to rotate, but fixed in position inside the apparatus housing. The pinion also meshes with a second rack which forms part of the extendible rod antenna.

Such a configuration provides that the antenna extends in response to the slidable element moving to reveal the keypad, and is withdrawn when the slidable element moves to conceal the keypad.

The antenna for use in embodiments of the invention can take any of a number of forms. The antenna described particularly consists of a helical element mounted atop, but not electrically connected to, a rod antenna. The antenna is configured such that the helical element is connected to the transceiver when the antenna is retracted, and the rod antenna is connected when the antenna is extended. However, it is possible to configure apparatus using only a rod antenna, or using a rod antenna which extends through a helical element, or using a rod antenna loaded with a helical element, or any number of alternative configurations which will be apparent to the skilled man.

For a better understanding of the present invention, and to understand how the same may be brought into effect, the invention will now be described, by way of example only, with reference to the appended drawings in which:
Figure 1a shows a clamshell type telephone, in the closed position, according to the prior art;
Figure 1b shows a clamshell type telephone, in the open position, according to the prior art;
Figure 2a shows a plan view of part of the internal configuration of a clamshell type telephone according to a first embodiment of the invention;
Figure 2b shows an end view of the apparatus of Figure 2a in the direction of arrow X;
Figure 3a shows a side cross-sectional view of a second embodiment of the invention with cover closed; and
Figure 3b shows a side cross-sectional view of a second embodiment of the invention with cover open.

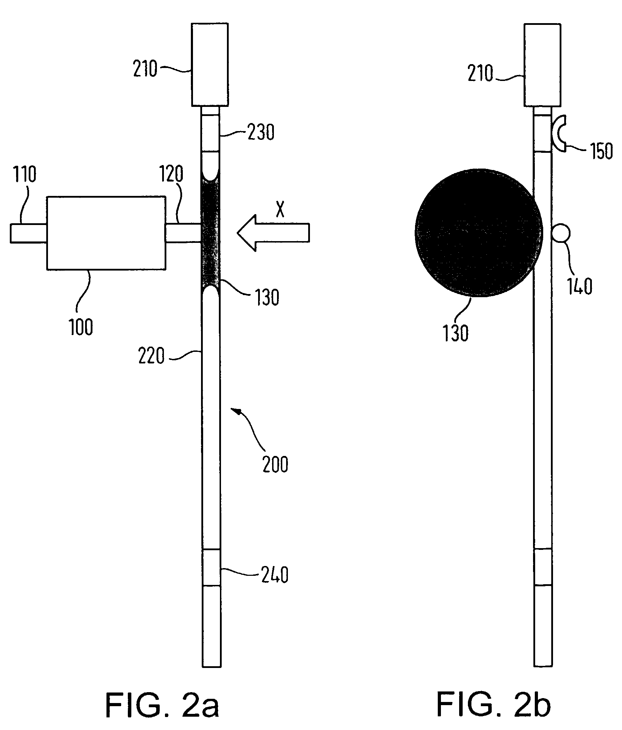

Figures 2a and 2b show how the hinge arrangement of the telephone of Figures 1a and 1b may be adapted according to an embodiment of the invention. The external appearance of the modified telephone may be identical to the prior art telephone 1.

Figure 2a shows a plan view of the antenna extending mechanism which is arranged inside the lower half 4 of the telephone 1. Figure 2a shows a reduction gearbox 100 having an input shaft 100 and an output shaft 120 connected to a friction drive wheel 130. Also shown is a different form of combined helical/rod antenna 200 to that used in the prior art solution presented earlier.

The reduction gear box 100 has an input 110 which is connected to the upper part 2 of the clamshell telephone 1. Movement of the upper part relative to the lower part provides approximately 160° of input rotation. i.e. when fully opened, the two halves of the clamshell are arranged to form an angle of 160°.

The task of the reduction gearbox is to convert this 160° of rotation into several turns of the friction wheel 130 to fully extend the antenna 200 and drive it out of the housing 4.

The internal configuration of the gearbox depends on such factors as: the amount of input rotation available; the length of the antenna; the diameter of the friction wheel; and the amount of free space available inside the housing 4. Many manufacturers of such gearboxes are able to undertake custom orders to exactly meet the specified requirements.

Figure 2a shows the friction wheel 130 connected to the output shaft 120 of the gearbox 100. The friction wheel can be seen to have a concave cross section at its outer edge. This is to accommodate the generally circular crosssection of the antenna 200, which is in a close frictional fit with the wheel 130.

Figure 2b shows an end view of the arrangement of Figure 2a in the direction of arrow X. Here it can be seen how the antenna 200 is accommodated within the concave outer portion of the friction wheel 130. The frictional fit is further enhanced by the provision of pinch wheel 140, which acts to bias the antenna towards the friction wheel, and ensure that good frictional contact is maintained at all times.

The antenna 200 is a hybrid rod/helical antenna. The helical antenna is contained within portion 210 which is at the extreme end of the antenna 200. The helical antenna is electrically connected to conductive collar 230. The rod antenna is contained within electrically non-conducting sheath 220. The rod antenna is electrically connected to conductive collar 240. In this and other embodiments of the invention the helical antenna is carried by the rod antenna. The helical and rod antennas in such embodiments may or may not be connected together. When they are connected together they are designed to operate independently.

Opening the clamshell arrangement fully requires the two portions 2, 4 of the telephone 1 to be moved through approximately 160° relative to each other. It is necessary to utilise this motion to propel the antenna 200 from its position inside the housing 4 to its fully extended position. Opening the clamshell to its full extent coincides with the rod antenna reaching its full extension. In a similar fashion, completely closing the two halves of the telephone coincides with the rod antenna being completely retracted.

The 160° rotation, through which the two halves of the telephone move, is translated into several turns of the friction wheel 130 via the reduction gearing mechanism 100. The friction wheel 130 contacts the shaft 220 of the antenna 200 directly, and the rotation of the friction wheel acts to propel the antenna in a linear fashion either outwards from the housing, or inwards, depending on whether the clamshell arrangement is being opened or closed respectively.

The use of a friction wheel 130 ensures that the antenna 200 and/or the gearing mechanism 100 will not be damaged if an attempt is made to move the antenna independently from the clamshell arrangement. If such an attempt is made, the antenna merely slips against the wheel, and will return to its normal operation when the clamshell arrangement is next opened or closed.

When the clamshell is closed, the antenna 200 is fully retracted, and only the helical antenna is functional. The helical antenna is connected to the transceiver of the telephone via fixed spring contact 150 and conductive collar 230. The rod antenna is not connected, and so is not in circuit.

However, when the clamshell is fully opened, the antenna 200 is fully extended, and only the rod antenna is functional. The rod antenna is connected to the transceiver via fixed spring contact 150 and conductive collar 240. The helical antenna is not connected, and so is not in circuit.

In a preferred embodiment, the clamshell arrangement is equipped with a selfopening mechanism. Such a mechanism allows the user to activate a release button which causes the clamshell arrangement to be urged towards the fully opened position. Such a mechanism can be realised through use of a torsion spring fitted in the hinge mechanism, which acts to urge the two halves of the clamshell arrangement apart towards the equilibrium position where they are approximately 160° apart. Closing the clamshell arrangement requires the user to provide energy to overcome the biasing of the spring, and this energy is stored in the spring and utilised when the telephone is next opened. The release mechanism re-engages when the clamshell arrangement is fully closed and locks the arrangement in the closed position.

In practice, the user pushes the release button, and the clamshell arrangement will open under the action of the energy-storing torsion spring, and the antenna will extend simultaneously. Once the user has completed his telephone call, he manually closes the clamshell arrangement, overcoming the bias of the torsion spring, and causing the antenna to be withdrawn simultaneously.

The antenna extending mechanism offers an additional advantage in that it acts to damp the opening of the clamshell in the embodiment where the selfopening mechanism is used. The energy required to extend the antenna dissipates some of the energy stored in the spring so that the upper half of the clamshell does not hit its end-stop with such a great force, thus minimising the mechanical shock it experiences upon opening.

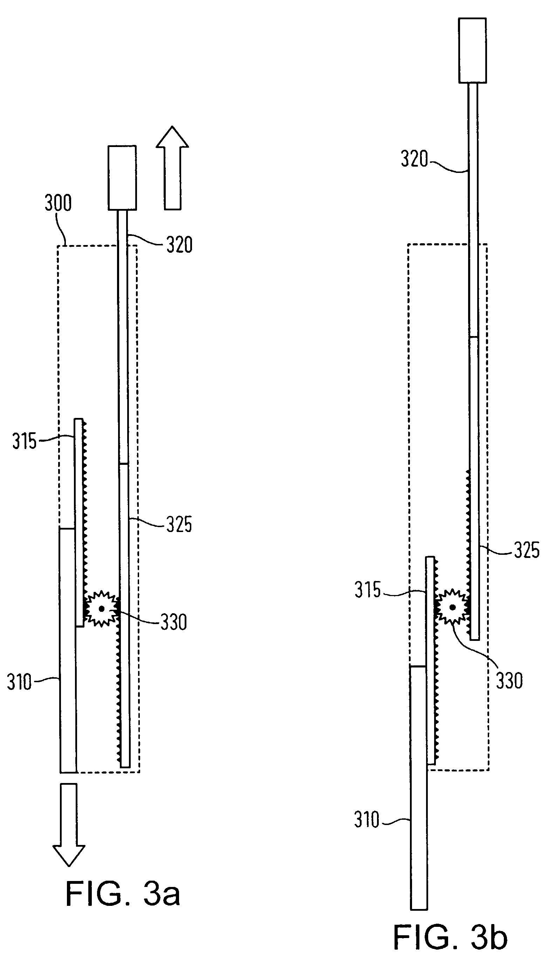

Figures 3a and 3b show a further embodiment of the invention applied to a telephone having a different physical configuration. In this embodiment, the telephone 300 has a slidable cover 310, an antenna 320, two racks 315, 325, and a pinion 330.

Figure 3a shows a side cross-sectional view of the telephone 300 with the cover 310 in the closed position, and consequently, the antenna 320 in the fully retracted position. The cover 320, which is visible to the user, extends internally via rack 315, which is concealed inside the telephone 300. Rack 315 is an elongate member which is provided with teeth along its length.

Rack 315 is arranged so that its teeth engage with correspondingly dimensioned teeth on pinion 330. Pinion 330 is fixedly positioned internal to the telephone so that rack 315 engages with it on a first side. On a second, opposite side of pinion 330, its teeth engage with a second rack 325 attached to the internal end of antenna 320.

The positioning of the two racks 315, 325 on respectively opposite sides of pinion 330 ensures that a relatively downward motion of the cover 310 ensures that the antenna, via rack 325, experiences a relatively upward motion as indicated by the arrows in Figure 3a.

This embodiment again makes use of the fact that there is provided, within the telephone, a structure which requires the user to provide a mechanical force to some part of the telephone. This force, which has to be applied in any case, can then be utilised for the secondary purpose of extending and retracting the antenna.

In this embodiment, the position of the cover is also used to control whether the telephone is on-hook or off-hook i.e. if the telephone rings, the call may be answered by sliding the cover to the open, off-hook position, and the call may then be terminated by sliding it into the closed, on-hook position.

The connection of the antenna to the transceiver of the telephone can be arranged in a similar manner to that described in relation to the first embodiment. i.e. the use of a sprung clip contacting one of two conductive areas on an otherwise non-conducting outer sheath of the antenna.

This embodiment can be further enhanced in a manner similar to the previously described embodiment. The Nokia ® 7110 telephone is equipped with a cover which can be made to move from a closed to an open position automatically, in response to the actuation of a release button which releases the energy stored in a spring, and urges the cover in a linear manner, to the open position.

To close the cover, the user must push it so that the bias of the spring is opposed, and the keypad is once more covered by the cover. This motion causes the antenna to be retracted inside the housing of a telephone adapted according to this embodiment of the invention. Once the cover is returned to its fully closed state, it is retained in this position by the release mechanism.

The Nokia ® 7110 model of telephone is currently equipped with a helical antenna, but adapting it in accordance with embodiments of this invention, a rod antenna could be used, and configured so that the antenna extends in response to the actuation of the release button which has heretofore only controlled the opening of the cover.

Although the first embodiment has been described as utilising a friction wheel, and the latter embodiment as using a rack and pinion mechanism, the skilled man will realise that these mechanisms can be interchanged, and either configuration of telephone could use either drive mechanism.

In both embodiments, the principle of operation of the antenna mechanism is that application of a force by a user, or automatically from a biasing mechanism, results in the movement of one portion of the apparatus relative to the other portion. This force can be harnessed for the secondary purpose of extending or retracting the antenna of the apparatus.

In the light of the foregoing description, the skilled man will realise that other configurations of portable electronic equipment exist where it is desirable to be able to extend an antenna in response to some other action. In particular, portable devices for browsing the World Wide Web (WWW) are herein included within the definition of communication apparatus.

The present invention includes any novel feature or combination of features disclosed herein either explicitly or any generalisation thereof irrespective of whether or not it relates to the claimed invention or mitigates any or all of the problems addressed.

## Claims

1. A communication apparatus comprising:
a first portion;
a second portion, which is movable relative to the first portion; and
an extendible antenna, wherein the antenna is arranged such that a movement of the second portion, relative to the first portion, causes a related movement of the antenna.

2. A communication apparatus as claimed in claim 1, wherein the second portion is movable from a first position, where a keypad of the apparatus is covered.

3. A communication apparatus as claimed in claim 2, wherein movement of the second portion produces an off-hook condition in the communication apparatus.

4. A communication apparatus as claimed in claim 2 or 3, wherein the antenna reaches its full extension coincident with the second portion reaching a second position.

5. A communication apparatus as claimed in any one of claims 2 to 4, wherein the second portion is biased away from the first position.

6. A communication apparatus as claimed in claim 5, wherein extension of the antenna serves to damp the motion of the second portion.

7. A communication apparatus as claimed in any one of the previous claims, wherein the apparatus is of a clamshell construction.

8. A communication apparatus as claimed in claim 7 wherein rotational movement of the first portion relative to the second portion is translated into linear movement of the antenna.

9. A communication apparatus as claimed in claim 7 or 8, wherein movement of the first portion relative to the second portion drives a reduction gearing mechanism, which in turn drives a drive wheel in frictional connection with the antenna.

10. A communication apparatus as claimed in claim 9, wherein the frictional connection between the antenna and the drive wheel is enhanced by the use of a pinch wheel arranged such that the antenna is biased toward the drive wheel by the pinch wheel.

11. A communication apparatus as claimed in any one of claims 1 to 6, wherein the movement of the second portion relative to the first portion is a sliding movement.

12. A communication apparatus as claimed in claim 11, wherein the second portion is adapted to comprise a first rack, which drives a fixed position pinion, which in turn drives a second rack, which forms part of the antenna.

13. A communication apparatus as claimed in any one of the preceding claims, wherein the communication apparatus is a portable radio telephone.

14. A method for positioning an antenna of a communication apparatus, wherein:
a first force is applied to move a second portion of the apparatus relative to a first portion; and
the first force is translated into a second force which is used to correspondingly alter the position of the antenna.

15. A method as claimed in claim 14 wherein the first force is provided by the second portion being biased away from the first portion.

16. A method as claimed in claim 14 or 15 wherein movement of the second portion relative to the first portion causes an off-hook state in the apparatus.

17. A method as claimed in any one of claims 14 to 16 wherein the first force is produced by a rotational motion, and the second force produces a linear motion.

18. A method as claimed in any one of claims 14 to 16 wherein the first force is produced by a linear motion, and the second force produces a linear motion.
